# EUROPEAN PATENT SPECIFICATION

(11) **EP 2 097 916 B1**
(45) Date of publication and mention of the grant of the patent: **22.01.2014**
(21) Application number: 07852243.0
(22) Date of filing: 11.12.2007
(51) Int. Cl.: H01H 43/00, B60R 16/03, F02N 11/08, H02J 7/00

(54) **METHOD AND SYSTEM AT A VEHICLE**
VERFAHREN UND SYSTEM IN EINEM FAHRZEUG
PROCÉDÉ ET SYSTÈME POUR VÉHICULE

(30) Priority: 22.12.2006 SE 0602786
(43) Date of publication of application: 09.09.2009
(73) Proprietor: Scania CV AB (publ), 151 87 Södertälje (SE)
(72) Inventor: MADSEN, Peter, 144 62 Rönninge (SE)
(74) Representative: Thum, Bernhard
(86) International application number: PCT/SE2007/050971
(87) International publication number: WO 2008/079084

(56) References cited:
- EP-A1- 1 912 306
- EP-A2- 1 965 565
- DE-A1- 2 649 348
- DE-A1- 3 742 312
- DE-A1-102004 026 815
- DE-A1-102006 002 881
- US-A- 4 467 219
- US-A1- 2001 017 487
- US-A1- 2003 144 779
- US-A1- 2004 232 769
- US-B1- 6 268 663

## Description

### Field of the invention

The present invention relates to a method for reducing power consumption in a vehicle according to the preamble of claim 1. The present invention also relates to a system according to claim 14, an electronic control unit according to claim 27, a computer program according to claim 28, a computer program product according to claim 30 and a vehicle according to claim 31.

### Background of the invention

Modern motor vehicles, especially heavy vehicles, are equipped with numerous electronic components and electrical control units. In addition, the amount of electrical components is rapidly increasing, e.g., due to computerization of existing vehicle functions and the continuous development of, e.g., functions for facilitating vehicle driving and/or safety.

On the downside of the continuous increase in vehicle electronics is the corresponding increase in power consumption. For example, a modern trailer truck can comprise a considerable number of electronic control units, each comprising power consuming circuits such as one or more processing units (a.k.a. micro controllers), input/output drivers and other logic. A single premium heavy vehicle can comprise as many as 80 or more processing units. Further, a plurality of the control units receive input signals from, e.g., various sensors and other electronic equipment, which, in turn, may need power supply, and supply control signals to power consuming electronic equipment such as displays, loudspeaker systems, etc. To sum up, the overall power consumption from all these power consumers results in a substantial load on the vehicle energy accumulators, e.g., vehicle batteries. If too many of these consumers have been activated for too long while at the same time the vehicle combustion engine, and thereby the alternator functions for recharging the accumulators, have been turned off, there is a substantial risk that the accumulator energy level will be too low to properly operate the vehicle engine starter motor, and thereby too low to allow vehicle engine start and thus vehicle driving altogether.

US 6,268,663 E1 discloses a vehicle electric source control device providing a function which prevents battery death caused by leaving interior dome lamps or door lamps to be lighted. Thereby switches interact with the door of the vehicle and a lamp main relay.

DE 37 42 316 A1 discloses a system to protect the battery of a vehicle for a deep discharge. Hereby, the battery voltage is measured and if the level of the battery is beyond a predetermined level, power consuming units are disconnected.

DE 26 49 348 discloses an acoustic signal transmitter for reminding a user that a power consuming unit is still active, in particular a light of a vehicle.

Consequently, there exists a need for a power consumption control method that eliminates, or at least substantially reduces the possibility that the vehicle accumulator capacity is too low to allow vehicle combustion engine start.

### Summary of the invention

It is an object of the present invention to provide a method that solves the above mentioned problem. This object is achieved by a method according to the characterising portion of claim 1.

According to the present invention, a method for reducing power consumption in a vehicle, said vehicle including an engine and a plurality of power consuming units, said vehicle further including a multi-function switch, is provided. The multi-function switch is settable in a first position, for enabling activation of a first subset of said power consuming units, and a second position, for enabling activation of at least a second subset of said power consuming units. The method further comprises the step of, when said vehicle engine is turned off, determining if said multi-function switch is in said second position, and generating a signal if said multi-function switch has been in said second position for a predetermined time period.

This has the advantage that unintentional power consumption can be reduced, and thereby the risk of unintentionally draining the batteries can be substantially reduced.

Further characteristics of the present invention, and advantages thereof, will be evident from the following detailed description of preferred embodiments and appended drawings, which are given by way of example only, and are not to be construed as limiting in any way.

### Brief description of the drawings

Fig. 1 discloses a vehicle at which the present invention may advantageously be utilised.
Fig. 2 discloses an exemplary vehicle communication system for a vehicle such as the one disclosed in fig. 1.
Fig. 3 discloses an exemplary embodiment of the present invention.
Fig. 4 shows a flow diagram according to an exemplary embodiment of the present invention

### Detailed description of the invention

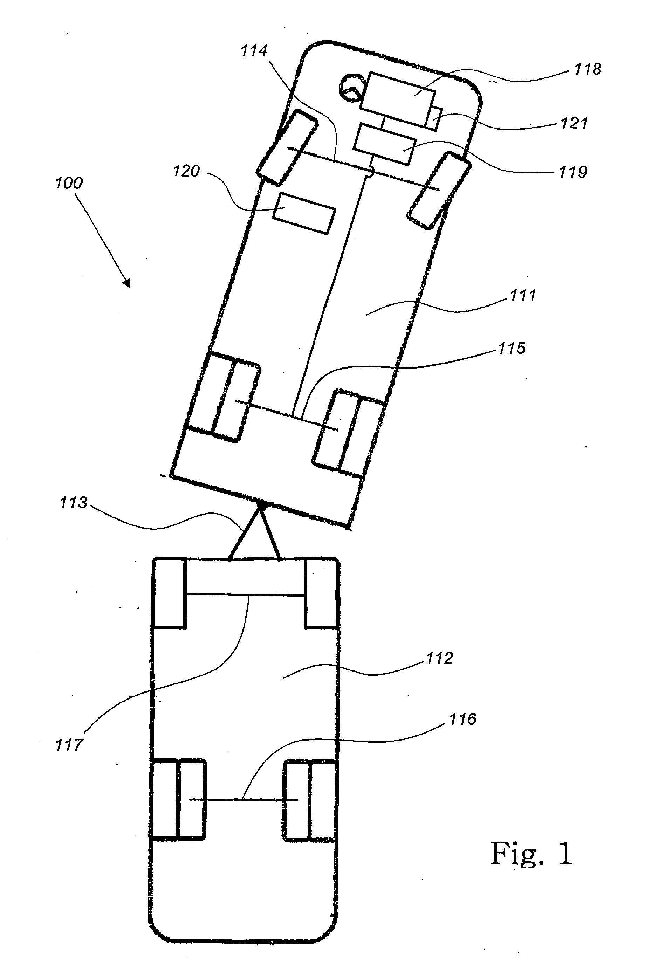

Fig. 1 discloses an example of a vehicle 100 at which the present invention advantageously may be utilised. The vehicle 100 constitutes an articulated vehicle having a front vehicle body 111 and a rear vehicle body 112. The front vehicle body 111 and said rear vehicle body 112 consists of a truck and a trailer, respectively, and are coupled together using an articulation mechanism 113, e.g., a conventional trailer coupling. The front vehicle body comprises a steering axle 114 and a transmission axle 115. The rear vehicle body (trailer) comprises axles 116 and 117, respectively. The front vehicle body further comprises a combustion engine 118, usually located in front of or below a cabin (cab), i.e., the driver's compartment (not shown), and which powers the transmission axle 115 via a gearbox 119. The vehicle 100 further comprises vehicle batteries 120 (usually a 24 V system in a heavy vehicle) for power supplying the vehicle electronics, such as the vehicle communication system, various lights and a starter motor 121 for starting the engine 118.

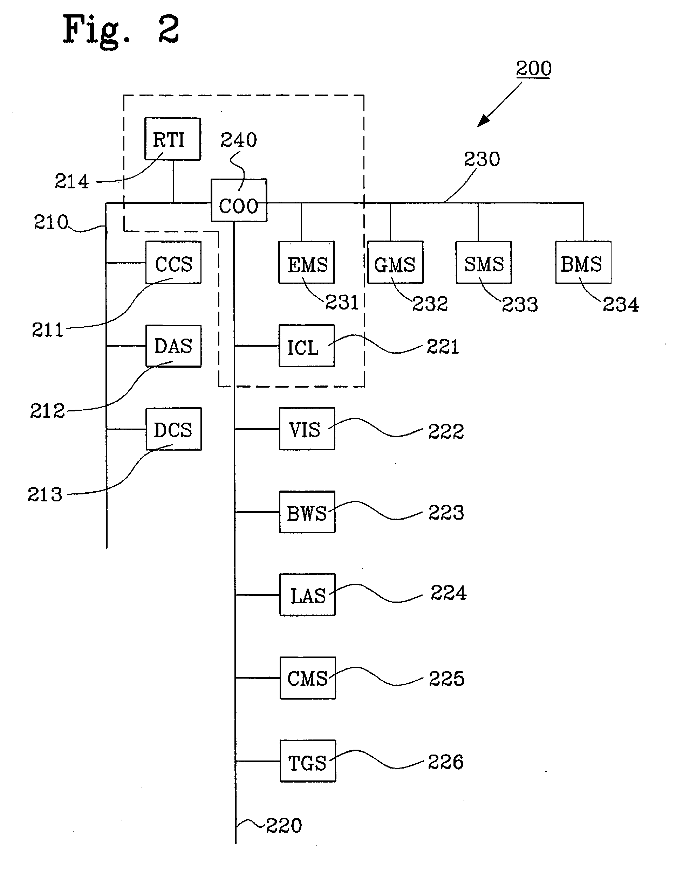

As was mentioned above, a premium heavy vehicle may comprise an extensive set of electrical components. Apart from the above mentioned control units and lights, such electrical components may consist of, e.g., DC electric motors, e.g., for wipers, liquid pumps, mirrors, headlamp levering, windows, fans, etc., relays and switches, solenoid valves, instruments and displays, sound and video equipment. Most or all of these electrical components are controlled by control units via the vehicle communication system, an example of which being disclosed in fig. 2.

The vehicle communication system 200 in fig. 2 comprises a communication bus system to interconnect control units and various components located on the vehicle. The control units are generally widely distributed over a vehicle, and, accordingly, the communication bus system extends through large parts of the vehicle. Communication bus systems of the kind disclosed in fig. 2 is usually of CAN (Controller Area Network) type, although other kinds of suitable communication technologies can be used as well, and include communication systems such as TTCAN, TTP (Time Triggered Protocol) and FlexRay. In the disclosed system 200, the control units are separated into groups with regard to criticality, wherein each group is connected to a respective communication bus, the communication buses being separated by a gateway node COO 240 which controls, and is responsible for, inter bus data transmission.

The disclosed system 200 includes three communication busses 210, 220, 230, each having a group of control units connected thereto. In the disclosed example, control units responsible for functions of low criticality are connected to the first communication bus 210, control units responsible for functions of semi-criticality are connected to the second communication bus 220, and, correspondingly, control units responsible for functions of high criticality are connected to the third communication bus 230. The degree of criticality may be based on the ability to operate the vehicle.

Control units providing functions having a low criticality, i.e., being connected to the first communication bus 210, can, for example, include a Climate Control System (CCS) 211, which provides climate functions for the vehicle, a Driver Assistance System (DAS) 212, which provides safety functions such as lane departure warnings and blind spot monitoring, a Door Control System (DCS) 213, which controls the doors of the vehicle, and a Road Transport Informatics system (RTI) 214, which controls functions such as traffic information and vehicle navigation. Low-criticality functions have in common that breakdown/malfunction usually does not result in substantial limitations in continued driving of the vehicle, thus allowing the driver to continue as planned.

Control units providing functions having semi-criticality, i.e., being connected to the second communication bus 220, may, e.g., include an Instrument Cluster (ICL) 221, controlling the instruments in the cabin, a Visibility System (VIS) 222, which controls the vehicle light functions, a Body Works System (BWS) 223, which controls the vehicle communication with additional systems, a Locking and Alarm System (LAS) 224, controlling the alarm functions of the vehicle, a Chassis Management System (CMS) 225, controlling the vehicle braking system and input/output signals of various modules located on the chassis, and a Trailer Gateway System (TGS) 226, controlling the vehicle communication with the trailer system.

Breakdown and/or malfunction of communication to or from these control units usually will not prevent continued driving of the vehicle, but may prevent the driver from normal operation of the vehicle.

Control units providing functions having high criticality, i.e., being connected to the third communication bus 230, may, e.g., include an Engine Management System (EMS) 231, which controls the engine functions of the vehicle, a Gearbox Management System (GMS) 232, which controls the gearbox functions of the vehicle, a Suspension Management System (SMS) 233, controlling the suspension functions of the vehicle, and a Brake Management System (BMS) 234, controlling the brake functions of the vehicle.

Breakdown and/or malfunction of communication to or from control units on the third communication bus 230 may prevent continued operation of the vehicle, possibly with an immediate stop of the vehicle as result.

Malfunctions of all of the above control units have in common that the driver preferably is informed about the fault, e.g. by means of display means or audibly through a speaker, so as to allow the driver to take appropriate action.

The three communication buses are interconnected (and separated) by a Co-ordinator System (COO) 240. The COO 240 ensures that signals are not unintentionally transmitted from one communication bus to another. Further, the COO controls bus load and prevents bus overload on each communication bus.

The separation of the three communication buses has the advantage that if, e.g., the communication bus 210 is malfunctioning due to a control unit short-circuiting the bus, communication on a bus controlling transmission of information of higher criticality is not affected.

The communication system shown in fig. 2 is only schematic, and may include a much greater number of control units. Further, the above mentioned electrical components, most of which being controlled by said control units, are not shown.

When a driver leaves and locks a vehicle of the above kind, most or all parts of the communication system, and, consequently, most or all of the control units, are switched off or put in a sleeping mode (in sleeping mode, the control units may wake each other up for information transmissions even when ignition is turned off, e.g., for receiving messages or periodically sending a vehicle position to a fleet management system. The time awake when the engine is turned off, however, is short compared to when the engine is started). This is necessary since otherwise there is a substantial risk that the power consumption of all these control units/electronic components in a rather short time would drain the vehicle batteries while the vehicle is parked with the engine, and thereby battery charging capabilities, switched off.

Consequently, the power consumption is kept to a minimum when the vehicle is left unattended, e.g., parked in a parking space overnight or for a longer period of time in order to ensure that there will be enough energy in the vehicle batteries to operate the starter motor and thereby start the vehicle combustion engine. There are, however, situations where the vehicle is parked and the engine is turned off, but the driver still is present in the vehicle. For example, the vehicle may be provided with a sleeper cabin so as to provide the driver with sleeping capabilities. For many drivers, nights away from home are common, and at such usage of the vehicle, power consumption when the vehicle combustion engine is turned off is a more delicate issue, since it can be expected that the driver has a wish to activate some of the vehicle functions when staying overnight in the vehicle. Such functions may include the radio and supplementary heating system.

According to the present invention, power consumption during a vehicle engine off-state is at least partially controlled using a multi-function switch such as the ignition switch.

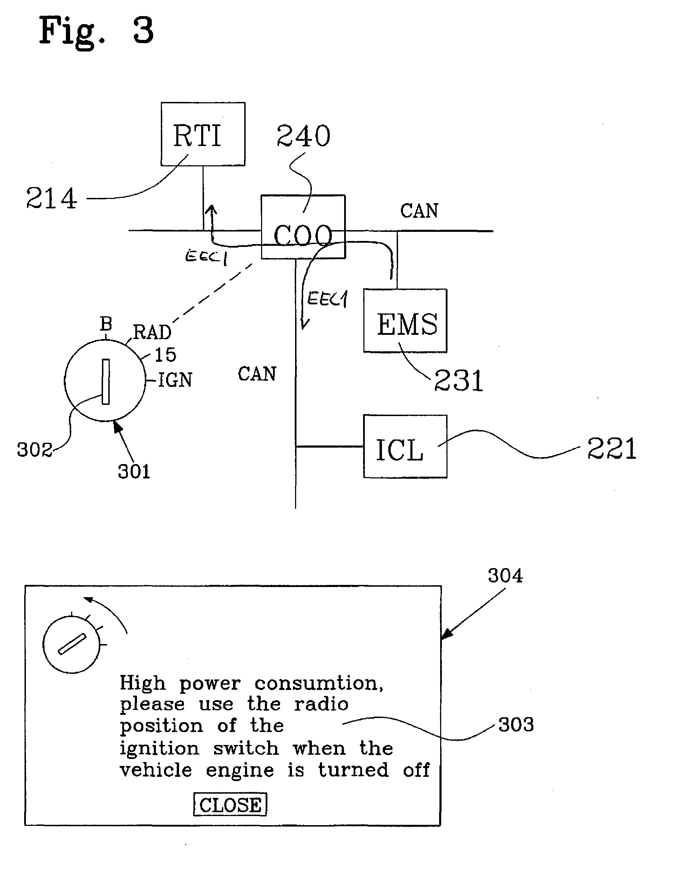

An exemplary embodiment of the present invention is disclosed in fig. 3. The figure shows the portion of the communication system 200 in fig. 2 within dashed lines, i.e., the COO 240, the EMS 231, the RTI 214 and ICL 221. The figure also shows an ignition switch 301 having a slot 302 for insertion of a key (not shown) for actuating the switch, and four angular positions B, RAD, 15, IGN, to which the ignition switch can be set using the key (although heavy vehicles are commonly provided with diesel engines, and thereby do not have an ignition system in a strict sense, the term ignition switch is used all the same in the present description and claims, since the functionality of the ignition switch in a drivers perspective is very much the same as in a petrol engine vehicle).

The B position, or zero or off position, (hereinafter called zero position), is the position wherein the ignition switch key is inserted and removed, and in which position the vehicle control system and control units are turned off, and power to electronic components is switched off. When the key is inserted, it may close a circuit so as to power, or wake up, some functions, e.g. preventing an unintentional locking of the vehicle, such as unintentionally pressing a lock button, if any, on the key when inserted into the ignition switch.

When the key is turned to the RAD position, or first or accessories position, (hereinafter called first position), certain control units or components, such as the radio, can be powered. Control units and components that use too much battery power, however, such as power consuming control units and most or all parts of the communication system, remain off in order to prevent the vehicle battery(ies) from being drained.

The 15 position, or ON or second position, (hereinafter called second position) turns on and/or wakes up most of the vehicle control units and communication buses, with the consequence that computer programs start running and controlling various electronic components, as well as providing power to lights and other major power consuming electronic components, including those needed for allowing normal operation of the vehicle.

The last position is the IGN (Ignition) position, (hereinafter called START position. The START position is spring loaded so that the ignition switch will return to the second position when the key is released after starting, or attempting to start, the vehicle. When the key is turned to the START position, the starter motor engages, and when the key is released, the spring returns the switch to the second position, i.e., power to the starter motor is cut.

If, at a vehicle having such an ignition switch, a user (driver) is present, it is common to insert the key into the ignition switch, even if the driver has no intention to drive off immediately, or even in the near future. For example, the driver may, according to the above, return to the vehicle, e.g. from having dinner, to spend the night in the sleeper cabin. The driver may then, for example, insert the key in an intention to set the ignition switch to the first position in order to, e.g., listen to the radio or operate the RTI system. For as long as the ignition switch is left in the first position, there is no immediate risk that the vehicle batteries will drain and prevent a successful operation of the starter motor, although some precaution should be taken if the, although limited number of, available functions in the first position are such large power consumers that a battery drainage might occur. However, the possibility then exists of the driver turning the key to the second position, either unintentionally or in order to, e.g., operate an electrically-operated window. In such a situation, there is a substantial risk, in particular when the key is unintentionally turned to the second position, that the driver will not turn the key back to the first position, which, if the driver does not notice this in time, may lead to drainage of the battery. According to the present invention, this problem is overcome, or at least substantially reduced, by generating a signal if the ignition switch is in the second position for a predetermined time period while at the same time the vehicle combustion engine is turned off.

In one exemplary embodiment of the present invention, the generated signal is used to alert the driver. In this example, the present invention can be integrated as part of, e.g., the RTI system and/or the ICL system. For example, the present invention can be implemented at least partially as a computer program stored and executed in, e.g., a computer. Control units that comprise one or more processing units are to be regarded as computers, and thus said computer program can be stored and executed in, e.g., at least one of the RTI- and ICL control units. Further, said computer program may be stored in storage means such as a ROM (Read-Only Memory), PROM (Programmable Read-Only Memory), EPROM (Erasable PROM), Flash memory, EEPROM (Electrically Erasable PROM) or a hard disk drive. As can be seen in fig. 3, and as was disclosed above, both the RTI and ICL communicate on the vehicle communication system, and can listen to messages transmitted thereon. In modern vehicles, a large quantity of information regarding status of various systems are transmitted on the vehicle communication bus(es). The information is usually transmitted as data messages on the communication system, and the messages can include information such as the current number of revolutions (rpm) of the vehicle engine and/or a flag representing a started engine.

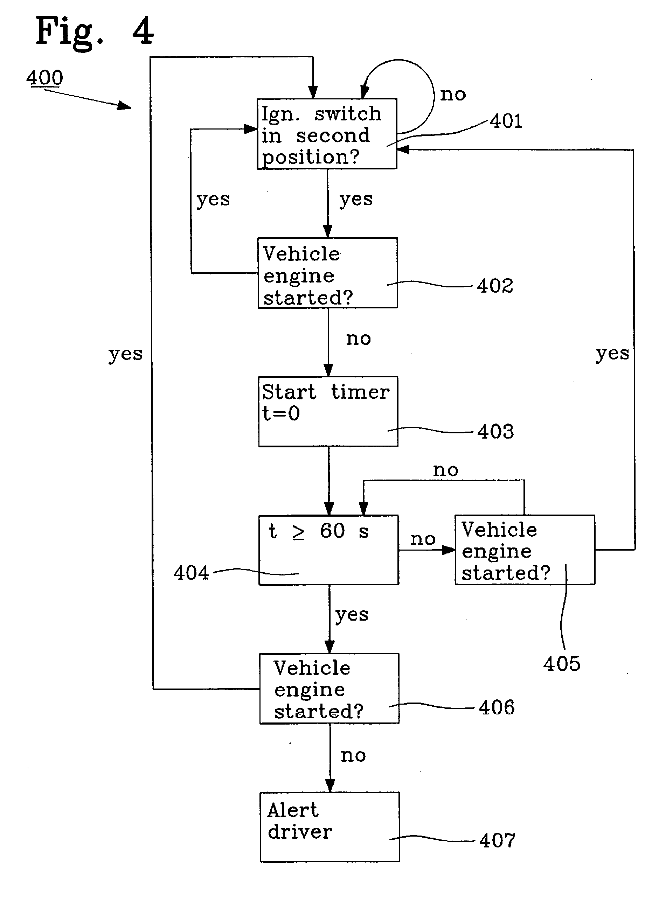

Fig. 4 shows a flow diagram 400 of an embodiment wherein the present invention is implemented using the RTI system.

In step 401 the RTI 214 determines whether the ignition switch is in the second position. The RTI 214 may obtain this information in several ways. For example, as was stated above, the different ignition switch positions can activate different power supply circuits. The RTI 214 can be power supplied by the first position, while, as can be seen in fig. 3, the COO 240, ICL 221 and EMS 231 can be power supplied by the second position. In this case, the RTI 214 will know that the ignition switch is in the second position when the COO wakes up and starts transmitting data on the communication bus 210. In an alternative embodiment, the RTI 214 may have an input for detecting, e.g., a voltage that is applied to the input when the switch is set to the second position.

The process disclosed in fig. 4 will remain in step 401 until the RTI 214 determines that the switch 301 is in the second position, in which case the process continues to step 402. In step 402 it is determined if the vehicle engine is started. This determination may be performed in various ways, e.g., the RTI 214 could comprise an input for receiving signals from an engine revolution indicator. Advantageously, however, the RTI 214 receives information regarding the engine status on the communication bus 210. In a vehicle of the above kind, there may be several data messages that are transmitted on the vehicle communication bus(es) and that contain information regarding whether the engine is started or not. For example, the EMS 231 may transmit a message containing a flag that represents "engine started" and/or a message containing the current engine rpm. For example, in at least some of the Scania trucks, the EEC1 message constitutes such a message that is transmitted on the communication buses and that contains the engine rpm. In order to determine if the engine is started, e.g., the current rpm received by an EEC1 message can be compared to a threshold rpm value, e.g. 250 rpm, and if the current rpm exceeds the threshold value, the engine status is determined to be started. The threshold should be set to a value exceeding the maximum rpm available by the starter motor. In another example, the engine may be determined as turned off if no message containing the engine rpm is received at all.

If it is determined, in step 402, that the engine is started, the process returns to step 401. Otherwise, the process continues to step 403, in which a timer t is set to zero and started and the process continues to step 404, in which the current timer value is compared to a threshold value, e.g., 60 seconds. If the current value of t is lower than the threshold value, the process continues to step 405, in which it is again determined if the vehicle engine is started. If the engine is started, the process returns to step 401, otherwise it returns to step 404. When it, in step 404, is determined that the timer value t equals or exceeds the threshold value, i.e., 60 s, the process continues to step 406, wherein it once again is determined whether the engine is started, and if so, the process returns to step 401. Otherwise, the process continues to step 407, in which a signal is generated. This signal may constitute a message 303 to alert the driver and be displayed on the display 304 of the RTI unit, and may, for example, read "High power consumption, please use the radio position of the ignition switch when the vehicle engine is turned off". The text may be combined with a symbol representing the ignition switch, for example in combination with an arrow representing the turning direction towards the first position. As an alternative or complement to this message, a similar message may be displayed by a display of the ICL 221, in which case the RTI 214 transmits a request to the ICL 221 to display the message. As a further alternative, some sort of sound, e.g., a summer or a human voice, can be used as an alternative or complement to the above. This has the advantage that the driver can be notified after a rather short time in order to prevent battery drainage. Naturally, any suitable time period threshold may be used, not necessarily 60 seconds as disclosed above, but, e.g., 30 s, 2 minutes, 5 minutes, 10 minutes, etc.

In the above example, the present invention has been implemented in the RTI 214. It is, however, also possible to implement the present invention in another control unit. For example, the present invention may be integrated in the instrument cluster ICL 221, in which case a solution similar to the above may be utilised (and, also, the ICL may request the RTI to display and/or generate a certain message or sound). It is also possible to implement the present invention in a dedicated control unit, or any other suitable control unit.

Further, it is to be understood that it is not necessarily the EMS that transmits messages regarding engine status. Such information may be transmitted from other control units as well. For example, if an alternator control unit is used, this control unit may transmit messages from which engine status can be read or derived. As another alternative, the control unit implementing the present invention may obtain the current electrical system voltage. If, for example, the voltage is 28V, the alternator is running and thereby also the engine. If, on the other hand, the voltage is 24V, the alternator is not running, and thereby the engine probably is not either. This is, however, not a guarantee that the engine is turned off, since the alternator can be malfunctioning while the vehicle is in motion.

In an alternative embodiment, the signal generated in step 407 in fig. 4 can be used to operate some electro-mechanical means instead, which electro-mechanical means are used to mechanically force the switch from the second position to the first position, i.e., without user interaction. The electro-mechanical means may, e.g., consist of any suitable means to perform the necessary rotation of the switch (key), such as a stepper motor. This embodiment has the advantage that it at all times can be ensured that the power consumption can be forced to decrease to a lower level. Further, this embodiment may advantageously be used in combination with the above described embodiment, i.e., if the driver does not notice the message generated according to the above, the switch may be forced back to the second position after a second predetermined time period, e.g., 2 minutes after the message according to the above was generated. Use of a "force-back" solution, however, should not be based on voltage level determination according to the above alone, since the alternator may be broken but the vehicle still being in motion. Therefore, such a solution should preferably be combined with other data, such as wheel speed so that the engine is not accidentally turned off while the vehicle is moving.

In the above description, a communication system using three communication buses have been used. This is, of course, just an example of a vehicle communication system, and the present invention is equally applicable in a communication system utilising only one or two communication buses, as well as in a system utilising four or more communication buses.

Further, in the above description, the multi-function switch has been disclosed as an ignition switch wherein a key is used to set the switch in different angular positions. The switch may, however, consist of a device wherein the slot and key are replaced by a rotatable knob instead, which knob can be used to set the switch in the disclosed angular positions by rotating the knob.

Even further, in another embodiment of the present invention, the switch is, instead of having angular positions, arranged such that said positions are set by inserting a key further and further into a slot, i.e., said first position is obtained by inserting the key partially into the slot, and said second position is obtained by inserting the key further into the slot. The actuation of a starter motor may, e.g., be achieved by a spring-loaded innermost position, which forces the key back to the second to the innermost position when releasing the key.

Further, the disclosed ignition switch has been disclosed as having four positions. A vehicle, however, may have two off positions, wherein one turns off the vehicle, and the other allows the key to be removed from the ignition, and consequently, the ignition switch may have five positions.

In addition, in the simplest form of the present invention, the switch comprises only two positions, e.g., said first position and said second position. Such a solution may, e.g., be found in a vehicle wherein the actual starting of the vehicle is accomplished by turning a separate key, or pushing a separate START button.

## Claims

1. Method for reducing power consumption in a vehicle (100), said vehicle (100) including an engine and a plurality of power consuming units, said vehicle (100) further including a multi-function switch, said multi-function switch being settable in:
- a first position, for enabling activation of a first subset of said power consuming units, and
- a second position, for enabling activation of at least a second subset of said power consuming units,
wherein the method further includes the steps of:
- when said vehicle engine is turned off:
a. determining if said multi-function switch is in said second position,
b. generating a signal if said multi-function switch has been in said second position for a first predetermined time period.

2. Method according to claim 1, wherein said generated signal is used to alert a user of said vehicle (100).

3. Method according to claim 1, wherein said generated signal is used to set said multi-function switch to said first position by means of electro-mechanical means.

4. Method according to claim 3, wherein it further includes the step of, when a signal alerting a user has been generated, setting said multi-function switch to said first position if said multi-function switch has been in said second position for a second predetermined time period, said second predetermined time period being lounger than said first predetermined time period.

5. Method according to any of the claims 1-4, wherein, at least in operation, the power demands of said second subset of power consuming units exceeds the power demand of said first subset of power consuming units.

6. Method according to any of the claim 1-5, wherein said multi-function switch further comprises a start position, for powering a vehicle engine starter motor.

7. Method according to claim 6, wherein said start position is a spring-loaded position, returning to said second position when releasing an actuator operating said switch.

8. Method according to any of the claims 1-7, wherein said multi-function switch further includes a zero position, being an off-position.

9. Method according to any of the preceding claims, wherein said multi-function switch positions are angular positions.

10. Method according to any of the claims 1-8, wherein said multi-function switch positions are linearly displaced positions, set by operating a linearly movable actuator.

11. Method according to any of the preceding claims, wherein said multi-function switch further comprises a slot for insertion of a key, wherein said key is used as actuator to set said multi-function switch to a desired position of said positions.

12. Method according to any of the preceding claims, wherein said multi-function switch is an ignition switch (301).

13. Method according to any of the preceding claims, wherein said engine is a combustion engine (118).

14. System for reducing power consumption in a vehicle (100), said vehicle including an engine and a plurality of power consuming units, wherein the system further includes a multi-function switch, said multi-function switch being settable in:
- a first position, for enabling activation of a first subset of said power consuming units, and
- a second position, for enabling activation of at least a second subset of said power consuming units,
**characterised in that** the system includes
a. means adapted to determine if said multi-function switch is in said second position, and
b. means adapted to generate a signal if said multi-function switch has been in said second position for a predetermined time period, when said vehicle engine is turned off.

15. System according to claim 14, wherein said generated signal is arranged to alert a user of said vehicle (100).

16. System according to claim 14 or 15, wherein said generated signal is arranged to be used to set said multi-function switch to said first position by means of electro-mechanical means.

17. System according to claim 16, wherein it further includes means for, when a signal alerting a user has been generated, setting said multi-function switch to said first position if said multi-function switch has been in said second position for a second predetermined time period, said second predetermined time period being longer than said first predetermined time period.

18. System according to any of the claims 14-17, wherein, at least in operation, the power demands of said second subset of power consuming units exceeds the power demand of said first subset of power consuming units.

19. System according to any of the claims 14-18, wherein said multi-function switch further comprises a start position, for powering a vehicle engine starter motor.

20. System according to claim 19, wherein said start position is a spring-loaded position, arranged to return to said second position when releasing an actuator operating said switch.

21. System according to any of the claims 14-20, wherein said multi-function switch further includes a zero position, being an off-position.

22. System according to any of the claims 14-21, wherein said multi-function switch positions are angular positions.

23. System according to any of the claims 14-21, wherein said multi-function switch positions are linearly displaced positions, set by operating a linearly movable actuator.

24. System according to any of the claims 14-23, wherein said multi-function switch further comprises a slot for insertion of a key, wherein said key is used as actuator to set said multi-function switch to a desired position of said positions.

25. System according to any of the claims 14-24, wherein said multi-function switch is an ignition switch (301).

26. System according to any of the claims 14-25, wherein said engine is a combustion engine (118).

27. Electronic control unit for use with a vehicle (100), said vehicle (100) including an engine and a plurality of power consuming units, said vehicle further including a multifunction switch, said multi-function switch being settable in:
- a first position, for enabling activation of a first subset of said power consuming units, and
- a second position, for enabling activation of at least a second subset of said power consuming units,
**characterised in that** the control unit includes means for, when said vehicle engine is turned off:
a. determining if said multi-function switch is in said second position,
b. generating a signal if said multi-function switch has been in said second position for a predetermined time period.

28. Computer program, **characterised in** code means, which when run in a computer causes the computer to execute the method according to any of the claims 1-13.

29. Computer program product including a computer readable medium and a computer program according to claim 28, wherein said computer program is included in the computer readable medium.

30. Computer program product according to claim 29, **characterised in that** said computer readable medium consists of one or more from the group: ROM (Read-Only Memory), PROM (Programmable Read-Only Memory), EPROM (Erasable PROM), Flash memory, EEPROM (Electrically Erasable PROM), hard disk drive.

31. Vehicle (100), **characterised in that** it includes a system according to any of the claims 14-26.

## Patentansprüche

1. Verfahren zur Reduzierung des Stromverbrauchs in einem Fahrzeug (100), wobei das Fahrzeug einen Motor und eine Vielzahl von stromverbrauchender Einheiten umfasst, und das Fahrzeug (100) ferner einen Multifunktionsschalter aufweist, wobei der Multifunktionsschalter stellbar ist in:
- eine erste Position, die die Aktivierung eines ersten Teils der stromverbrauchenden Einheiten zulässt, und
- eine zweite Position, die die Aktivierung wenigstens eines zweiten Teils der stromverbrauchenden Einheiten zulässt,
wobei das Verfahren ferner die Schritte aufweist:
- dann, wenn der Fahrzeugmotor ausgeschaltet ist:
a. Feststellen, ob der Multifunktionsschalter sich in der zweiten Position befindet,
b. Erzeugen eines Signals, falls sich der Multifunktionsschalter für einen ersten vorbestimmten Zeitraum in der zweiten Position befunden hat.

2. Verfahren nach Anspruch 1, wobei das erzeugte Signal zum Alarmieren des Nutzers des Fahrzeugs (100) verwendet wird.

3. Verfahren nach Anspruch 1, wobei das erzeugte Signal zum Setzen des Multifunktionsschalters in die erste Position mittels eines elektromechanischen Mittels verwendet wird.

4. Verfahren nach Anspruch 3, wobei das Verfahren ferner den Schritt umfasst: dann, wenn ein Signal zum Alarmieren des Nutzers erzeugt wurde: Setzen des Multifunktionsschalters in die erste Position, falls sich der Multifunktionsschalter für einen zweiten vorbestimmten Zeitraum in der zweiten Position befunden hat, wobei die zweite Zeitspanne länger als die erste Zeitspanne ist.

5. Verfahren nach einem der Ansprüche 1 bis 4, wobei wenigstens im Betrieb der Strombedarf des zweiten Teils der stromverbrauchenden Einheiten den Strombedarf des ersten Teils der stromverbrauchenden Einheiten übersteigt.

6. Verfahren nach einem der Ansprüche 1 bis 5, wobei der Multifunktionsschalter ferner eine Startposition zum Antreiben eines Fahrzeugmotorstartermotors aufweist.

7. Verfahren nach Anspruch 6, wobei die Startposition eine federbeaufschlagte Position ist, die zu der zweiten Position zurückkehrt, wenn ein den Schalter betätigender Aktuator freigegeben wird.

8. Verfahren nach einem der Ansprüche 1 bis 7, wobei der Multifunktionsschalter ferner eine Nullposition umfasst, die eine Aus-Position ist.

9. Verfahren nach einem der voranstehenden Ansprüche, wobei die Multifunktionsschalterpositionen Winkelpositionen sind.

10. Verfahren nach einem der Ansprüche 1 bis 8, wobei die Multifunktionsschalterpositionen linear verlagerbare Positionen sind, die durch Betätigen eines linear verlagerbaren Aktuators gesetzt werden.

11. Verfahren nach einem der voranstehenden Ansprüche, wobei der Multifunktionsschalter einen Schlitz zum Einführen eines Schlüssels aufweist, wobei der Schlüssel als Aktuator zum Setzen des Multifunktionsschalters in eine gewünschte Position der genannten Position verwendet wird.

12. Verfahren nach einem der voranstehenden Ansprüche, wobei der Multifunktionsschalter ein Zündungsschalter (301) ist.

13. Verfahren nach einem der voranstehenden Ansprüche, wobei der Motor ein Verbrennungsmotor (118) ist.

14. System zur Reduzierung des Stromverbrauchs in einem Fahrzeug (100), wobei das Fahrzeug einen Motor und eine Vielzahl von stromverbrauchenden Einheiten aufweist, wobei das System ferner einen Multifunktionsschalter umfasst, wobei der Multifunktionsschalter setzbar ist in:
- eine erste Position, die die Betätigung eines ersten Teils der stromverbrauchenden Einheiten zulässt, und
- eine zweite Position, die die Aktivierung wenigstens eines zweiten Teils der stromverbrauchenden Einheiten zulässt,
**dadurch gekennzeichnet, dass** das System umfasst:
a. Mittel zum Feststellen, ob der Multifunktionsschalter sich in der zweiten Position befindet, und
b. Mittel zum Erzeugen eines Signals, falls der Multifunktionsschalter sich für einen vorbestimmten Zeitraum in der zweiten Position befunden hat, wenn der Fahrzeugmotor ausgeschalten ist.

15. System nach Anspruch 14, wobei das erzeugte Signal dazu ausgebildet ist, einen Nutzer des Fahrzeugs (100) zu alarmieren.

16. System nach einem der Ansprüche 14 oder 15, wobei das erzeugte Signal ausgebildet ist, um den Multifunktionsschalter mittels eines elektromechanischen Mittels in die erste Position zu setzen.

17. System nach Anspruch 16, wobei das System ferner Mittel zum Setzen des Multifunktionsschalters in die erste Position aufweist, falls der Multifunktionsschalter sich für einen vorbestimmten zweiten Zeitraum in der zweiten Position befunden hat, wenn ein Signal zum Alarmieren eines Nutzers erzeugt wurde, wobei die zweite vorbestimmte Zeitspanne länger als die erste vorbestimmte Zeitspanne ist.

18. System nach einem der Ansprüche 14 bis 17, wobei zumindest im Betrieb der Strombedarf des zweiten Teils der stromverbrauchenden Einheiten den Strombedarf des ersten Teils der stromverbrauchenden Einheiten übersteigt.

19. System nach einem der Ansprüche 14 bis 18, wobei der Multifunktionsschalter ferner eine Startposition zum Antreiben eines Fahrzeugmotorstartermotors aufweist.

20. System nach Anspruch 19, wobei die Startposition eine federbeaufschlagte Position ist, die zum Zurückführen des Schalters in die zweite Position angeordnet ist, wenn ein Aktuator zum Betreiben des Schalters freigegeben wird.

21. System nach einem der Ansprüche 14 bis 20, wobei der Multifunktionsschalter ferner eine Nullposition umfasst, die eine Aus-Position ist.

22. System nach einem der Ansprüche 14 bis 21, wobei die Multifunktionsschalterpositionen Winkelpositionen sind.

23. System nach einem der Ansprüche 14 bis 21, wobei die Multifunktionsschalterpositionen linear verlagerbare Positionen sind, die durch Betätigen eines linear verlagerbaren Aktuators gesetzt werden.

24. System nach einem der Ansprüche 14 bis 23, wobei der Multifunktionsschalter ferner einen Schlitz zum Einführen eines Schlüssels aufweist, wobei der Schlüssel als Aktuator zum Setzen des Multifunktionsschalters in eine gewünschte Position der Positionen verwendet wird.

25. System nach einem der Ansprüche 14 bis 24, wobei der Multifunktionsschalter ein Zündungsschalter (301) ist.

26. System nach einem der Ansprüche 14 bis 25, wobei der Motor ein Verbrennungsmotor (18) ist.

27. Elektronische Steuereinheit zur Verwendung mit einem Fahrzeug (100), wobei das Fahrzeug (100) einen Motor und eine Vielzahl von stromverbrauchenden Einheiten umfasst, wobei das Fahrzeug ferner einen Multifunktionsschalter aufweist, wobei der Multifunktionsschalter setzbar ist in:
- eine erste Position, die das Aktivieren eines ersten Teils von stromverbrauchenden Einheiten zulässt, und
- eine zweite Position, die das Aktivieren wenigstens eines zweiten Teils der stromverbrauchenden Einheiten zulässt,
**dadurch gekennzeichnet, dass** die Steuereinheit Mittel umfasst zum, wenn der Fahrzeugmotor ausgeschaltet ist,
a. Feststellen, ob der Multifunktionsschalter sich in der zweiten Position befindet,
b. Erzeugen eines Signals, falls der Multifunktionsschalter sich in der zweiten Position für einen vorbestimmten Zeitraum befunden hat.

28. Computerprogramm **gekennzeichnet durch** Kodierungsmittel, die wenn sie auf einem Computer ausgeführt werden, den Computer zum Ausführen des Verfahrens nach einem der Ansprüche 1, bis 13 veranlassen.

29. Computerprogrammprodukt umfassend ein computerlesbares Medium und ein Computerprogramm nach Anspruch 28, wobei das Computerprogramm in dem computerlesbaren Medium umfasst ist.

30. Computerprogrammprodukt nach Anspruch 29, **dadurch gekennzeichnet, dass** das computerlesbare Medium aus wenigstens einem der folgenden Gruppen besteht: ROM (Festwertspeicher), PROM (programmierbarer Lesespeicher), EPROM (programmierbarer löschbarer Lesespeicher), Flash Speicher, EEPROM (elektrisch löschbarer programmierbarer Lesespeicher), Festplatte.

31. Fahrzeug (100) **dadurch gekennzeichnet, dass** das Fahrzeug ein System nach einem der Ansprüche 14 bis 26 umfasst.

## Revendications

1. Procédé pour réduire la consommation d'énergie dans un véhicule (100), ledit véhicule (100) comprenant un moteur et une pluralité d'unités consommant de l'énergie, ledit véhicule (100) comprenant en outre un commutateur multifonction, ledit commutateur multifonction pouvant être réglé dans :
- une première position, destinée à permettre l'activation d'un premier sous-ensemble desdites unités consommant de l'énergie, et
- une deuxième position, destinée à permettre l'activation d'au moins un deuxième sous-ensemble desdites unités consommant de l'énergie,
dans lequel le procédé comprend en outre les étapes consistant à :
- lorsque ledit moteur du véhicule est éteint :
a. déterminer si ledit commutateur multifonction se trouve dans ladite deuxième position,
b. générer un signal si ledit commutateur multifonction s'est trouvé dans ladite deuxième position pendant une première période de temps prédéterminée.

2. Procédé selon la revendication 1, dans lequel ledit signal généré est utilisé pour avertir un utilisateur dudit véhicule (100).

3. Procédé selon la revendication 1, dans lequel ledit signal généré est utilisé pour établir ledit commutateur multifonction à ladite première position au moyen d'un moyen électromécanique.

4. Procédé selon la revendication 3, comprenant en outre l'étape consistant à, lorsqu'un signal avertissant un utilisateur a été généré, établir ledit commutateur multifonction à ladite première position si ledit commutateur multifonction s'est trouvé dans ladite deuxième position pendant une deuxième période de temps prédéterminée, ladite deuxième période de temps prédéterminée étant plus longue que ladite première période de temps prédéterminée.

5. Procédé selon l'une quelconque des revendications 1 à 4, dans lequel, au moins en fonctionnement, la demande d'énergie dudit deuxième sous-ensemble d'unités consommant de l'énergie dépasse la demande d'énergie dudit premier sous-ensemble d'unités consommant de l'énergie.

6. Procédé selon l'une quelconque des revendications 1 à 5, dans lequel ledit commutateur multifonction comprend en outre une position démarrage, destinée à alimenter un moteur électrique de démarreur de moteur de véhicule.

7. Procédé selon la revendication 6, dans lequel ladite position démarrage est une position de rappel, revenant à ladite deuxième position lors du relâchement d'un actionneur actionnant ledit commutateur.

8. Procédé selon l'une quelconque des revendications 1 à 7, dans lequel ledit commutateur multifonction comprend en outre une position zéro, étant une position arrêt.

9. Procédé selon l'une quelconque des revendications précédentes, dans lequel lesdites positions de commutateur multifonction sont des positions angulaires.

10. Procédé selon l'une quelconque des revendications 1 à 8, dans lequel lesdites positions de commutateur multifonction sont des positions déplacées de manière linéaire, établies en actionnant un actionneur mobile de manière linéaire.

11. Procédé selon l'une quelconque des revendications précédentes, dans lequel ledit commutateur multifonction comprend en outre une fente pour l'insertion d'une clé, dans laquelle ladite clé est utilisée comme actionneur pour établir ledit commutateur multifonction à une position souhaitée parmi lesdites positions.

12. Procédé selon l'une quelconque des revendications précédentes, dans lequel ledit commutateur multifonction est un commutateur d'allumage (301).

13. Procédé selon l'une quelconque des revendications précédentes, dans lequel ledit moteur est un moteur à combustion (118).

14. Système destiné à réduire la consommation d'énergie dans un véhicule (100), ledit véhicule comprenant un moteur et une pluralité d'unités consommant de l'énergie, dans lequel le système comprend en outre un commutateur multifonction, ledit commutateur multifonction pouvant être établi dans :
- une première position, destinée à permettre l'activation d'un premier sous-ensemble desdites unités consommant de l'énergie, et
- une deuxième position, destinée à permettre l'activation d'au moins un deuxième sous-ensemble desdites unités consommant de l'énergie,
**caractérisé en ce que** le système comprend
a. un moyen adapté pour déterminer si ledit commutateur multifonction se trouve dans ladite deuxième position, et
b. un moyen adapté pour générer un signal si ledit commutateur multifonction s'est trouvé dans ladite deuxième position pendant une période de temps prédéterminée, lorsque ledit moteur du véhicule est éteint.

15. Système selon la revendication 14, dans lequel ledit signal généré est prévu pour avertir un utilisateur dudit véhicule (100).

16. Système selon la revendication 14 ou 15, dans lequel ledit signal généré est prévu pour être utilisé pour établir ledit commutateur multifonction à ladite première position au moyen d'un moyen électromécanique.

17. Système selon la revendication 16, comprenant en outre un moyen destiné à, lorsqu'un signal avertissant un utilisateur a été généré, établir ledit commutateur multifonction à ladite première position si ledit commutateur multifonction s'est trouvé dans ladite deuxième position pendant une deuxième période de temps prédéterminée, ladite deuxième période de temps prédéterminée étant plus longue que ladite première période de temps prédéterminée.

18. Système selon l'une quelconque des revendications 14 à 17, dans lequel, au moins en fonctionnement, la demande d'énergie dudit deuxième sous-ensemble d'unités consommant de l'énergie dépasse la demande d'énergie dudit premier sous-ensemble d'unités consommant de l'énergie.

19. Système selon l'une quelconque des revendications 14 à 18, dans lequel ledit commutateur multifonction comprend en outre une position démarrage, destinée à alimenter un moteur électrique de démarreur de moteur de véhicule.

20. Système selon la revendication 19, dans lequel ladite position démarrage est une position de rappel, prévue pour retourner à ladite deuxième position lors du relâchement d'un actionneur actionnant ledit commutateur.

21. Système selon l'une quelconque des revendications 14 à 20, dans lequel ledit commutateur multifonction comprend en outre une position zéro, étant une position arrêt.

22. Système selon l'une quelconque des revendications 14 à 21, dans lequel lesdites positions de commutateur multifonction sont des positions angulaires.

23. Système selon l'une quelconque des revendications 14 à 21, dans lequel lesdites positions de commutateur multifonction sont des positions déplacées de manière linéaire, établies en actionnant un actionneur mobile de manière linéaire.

24. Système selon l'une quelconque des revendications 14 à 23, dans lequel ledit commutateur multifonction comprend en outre une fente pour l'insertion d'une clé, dans laquelle ladite clé est utilisée comme actionneur pour établir ledit commutateur multifonction à une position souhaitée parmi lesdites positions.

25. Système selon l'une quelconque des revendications 14 à 24, dans lequel ledit commutateur multifonction est un commutateur d'allumage (301).

26. Système selon l'une quelconque des revendications 14 à 25, dans lequel ledit moteur est un moteur à combustion (118).

27. Unité de commande électronique pour utilisation avec un véhicule (100), ledit véhicule (100) comprenant un moteur et une pluralité d'unités consommant de l'énergie, ledit véhicule comprenant en outre un commutateur multifonction, ledit commutateur multifonction pouvant être établi dans :
- une première position, destinée à permettre l'activation d'un premier sous-ensemble desdites unités consommant de l'énergie, et
- une deuxième position, destinée à permettre l'activation d'au moins un deuxième sous-ensemble desdites unités consommant de l'énergie,
**caractérisé en ce que** l'unité de commande comprend un moyen destiné à, lorsque ledit moteur de véhicules est éteint :
a. déterminer si ledit commutateur multifonction se trouve dans ladite deuxième position,
b. générer un signal si ledit commutateur multifonction s'est trouvé dans ladite deuxième position pendant une période de temps prédéterminée.

28. Programme informatique, caractérisé en moyens de codes, qui lorsqu'exécuté dans un ordinateur, amène l'ordinateur à exécuter le procédé selon l'une quelconque des revendications 1 à 13.

29. Produit-programme informatique comprenant un support lisible sur ordinateur et un programme informatique selon la revendication 28, dans lequel ledit programme informatique est contenu dans le support lisible sur ordinateur.

30. Produit-programme informatique selon la revendication 29, **caractérisé en ce que** ledit support lisible sur ordinateur est composé d'un ou plusieurs éléments parmi le groupe composé de : ROM (mémoire morte), PROM (mémoire morte programmable), EPROM (mémoire morte programmable effaçable), mémoire flash, EEPROM (mémoire morte programmable effaçable électriquement), unité de disque dur.

31. Véhicule (100), **caractérisé en ce qu'**il comprend un système selon l'une quelconque des revendications 14 à 26.
